# EUROPEAN PATENT APPLICATION

(11) **EP 1 309 147 A1**
(43) Date of publication of application: **07.05.2003**
(21) Application number: 01410136.4
(22) Date of filing: 30.10.2001
(51) Int. Cl.: H04L 29/06

(54) **Method and apparatus for managing profile information in a heterogeneous or homogeneous network environment**

(71) Applicant: Hewlett-Packard Company, A Delaware Corporation, Palo Alto, CA 94304 (US)
(72) Inventor: Richie, Stephanie, 38000 Grenoble (FR); Brebner, Gavin, 38410 St. Martin d'Uriage (FR); Gittler, Mihaela, 38700 Corenc (FR)
(74) Representative: Lloyd, Richard Graham

(57) **Abstract**

A method of managing profile information in a heterogeneous network of devices is described, including the steps of distributing a user profile among one or more devices in the form of a plurality of profile nodes and administrating read/write operations on the profile nodes according to a coherence protocol, the coherence protocol being adapted to dynamically allocate administrative rights over the profile nodes to the devices, and conditionally cache the profile nodes according to dynamically determined caching rights. Characteristics and/or changes in the structure of the network and/or the devices constituting the network can cause the profile to be dynamically replicated and distributed across the network so that specific profile information is coherent and accessible to corresponding devices in the network. The invention provides a means for securely storing profile data across a disparate network while ensuring coherence and secutiry. Such profile data can include user data reflecting context preferences such as browsing preferences, financial data, user data etc.

## Description

### Technical Field

The present invention relates to methods and apparatus for administrating and managing profile information on networks of computers or computer-like devices. More particularly, although not exclusively, the present invention relates to methods and apparatus suitable for distributing and managing a users profile across a network of heterogeneous devices. For example, the present invention may be use to manage individual user profile information relating to, although without limitation, user identification parameters, language preferences, consumption patterns and network resource access patterns and preferences. The invention is also concerned with the maintenance of profile security and consistency. Although the detailed example provided herein is applicable to a single user in an environment of networked user/consumer devices, it is possible that the invention may find application in other regimes where characterizing profiles are used by a variety of device types and applications.

### Background Art

A profile can be thought of as a way of characterizing an element or elements within a context. For example, a user profile may characterize a person by specifying parameters such as the users name, language and browsing preferences. Such profile information may be used by a device to personalise the operation of various applications by configuring settings such as fonts, colours and the like. Other types of profile might specify information which is used to authenticate a user when accessing network resources. Other types of profile might describe a users address list, network location, access priveleges, password lists and frequently accessed net resources.

The definition of profile data can be expanded to include almost any type of data which is specific to a user and allows some form of personalisation. Thus, cookies can be considered to be profile data given that they can contain information describing a users browsing history, preferences and other user-specific parameters used when interacting with website.

Profiles generally take the form of individual files containing the characterising information. This information is collected by means of website query pages, forms, automatic user tracking and manual user input. Profile data can be extremely sensitive, particularly in the case of e-commerce profile data such as credit card numbers, banking data etc.

Profile information can be stored in a variety of locations and, other than relying on the party holding the data, the user generally has no control over how this information is used or who has access to it. Thus, to enhance user trust and privacy for data held at a remote storage location, a third trusted party could be part of the process. In any case, it is useful to have profile information stored on user devices to allow personalization even when the third party is not reachable. Depending on the context, profile data can be copied with relative ease. For example cookie tracking can reveal a users interests and cached passwords can allow access to web-based resources. This poses clear security risks. In the case of distributed profile information there is also the problem of retaining consistency of what can be diverse profile information scattered across a variety of platforms and locations.

To the present time, for standalone computers or non-networked resources, the issue of profile management has been slightly less problematic. It has been possible, within limits, to manage profile data in an ad hoc manner with little risk of inconsistent profile replication and generally few security risks.

However, developing technologies and present web use, pose significant problems.

When PDAs (personal digital assistants), mobile cellular phones, internet devices and PCs are considered coupled with a highly distributed network infrastructure, it is clear that profile management will be critical to both the security and usability of any computer-like resource or consumer device. More specifically, IT-based consumer products are becoming increasingly tightly linked to an individual user and/or context. For example, present generation mobile phones are becoming integrated with functions such as e-commerce, location positioning via GPS, user identification etc. All of these devices require some sort of user profiling which reflects user preferences, set-up options etc.

Aside from the security issues discussed above, specific profile data can sometimes provide only a narrow view of an individuals preferences or behaviour. This may cause either duplication of similarly scoped, but differently located data. Profile data for one device may also be relevant to contexts and applications appropriate to other devices.

A mechanism is clearly needed to help manage the accuracy, replication, consistency and privacy of this data.

Profile banking refers to a methodology and system that aims to provide to the user the impression of having a single coherent profile which is controlled in a secure and intuitive way. It is also desirable that the profile banking management system be capable of dealing with a user device space that potentially covers a wide variety of hardware with different functionality.

To this end, this invention was motivated by the analysis of privacy and usability of profiles in known network scenarios with extrapolations of user behaviour and requirements in the context of future devices and network paradigms. Further, it is envisaged that the invention may find application in analogous applications where coherent information is to be stored in a secure manner in a distributed data space across a network. Such an example might include backup systems or groupware document management systems having access control access hierarchies.

### Disclosure of the Invention

In one aspect, the invention provides for a method of managing profile information in a heterogeneous network of devices which may include the steps of:
- distributing a user profile among one or more devices in the form of a plurality of profile nodes; and
- administrating read/write operations on the profile nodes according to a coherence protocol, the coherence protocol being adapted to dynamically allocate administrative rights over the profile nodes to the devices, and conditionally cache the profile nodes according to dynamically determined caching rights.

Characteristics and/or changes in the structure of the network and/or the devices constituting the network can cause the profile to be dynamically replicated and distributed across the network so that specific profile information is coherent and accessible to corresponding devices in the network.

In a preferred embodiment, the read/write operations are adapted to conform to a write-invalidate protocol. The administration of a profile node may be performed by a master device.

Specific administrative rights for one or more specified profile nodes may be dynamically allocated to a device whereby that device then manages access rights to the one or more specified profile nodes and the data contained therein.

The specific administrative rights can dynamically migrate to other devices in response to changes in the network and the devices constituting the network.

For a profile node data request, the caching rights may be determined according to:
- the requesting devices characteristics;
- profile node data sensitivity; and
- policy rules.

The profile nodes may include one more profile item and corresponding attributes.

The present invention also provides for a system of networked heterogeneous devices, incorporating a profile bank, including:
- at least one supervisor device adapted to store management information for the devices in the system and a profile distributed across the system;
- one or more devices incorporating a bank cache adapted to store one or more profile nodes and a middleware component known as the bank manager as a means for handling operations on the profile nodes wherein administrative control over the profile nodes by the devices is varied dynamically in response to the characteristics of the devices and/or changes in the network and status of the devices and/or the operations carried out on the profile nodes.

Each device preferably incorporates a bank cache adapted to store one or more profile nodes. Each device may incorporate a bank manager adapted to manage the local profile node residing in the bank cache of the device.

The set of bank caches constitutes a distributed profile node space.

Consistency of the object space is preferably governed by a coherence protocol, the coherence protocol being adapted to dynamically allocate administrative rights over the profile nodes to the devices, and conditionally cache the profile nodes according to dynamically determined caching rights.

At least one copy of the distributed profile node space resides on one device.

### Brief Description of the Drawings

The present invention will now be described by way of example only and with reference to the drawings in which:
- Figure 1:: illustrates a simplified representation of a profile banking system;
- Figure 2:: illustrates a state diagram of an object-copy located in a bank cache of a host; and
- Figure 3:: illustrates a representation of the operation of the policy engine.

### Best Mode for Carrying Out the Invention

A profile bank is a middleware component incorporating an interface, which is installed on a single-user device allowing the user to store and manage his or her profile. The profile bank is intended to support the distribution of a user profile among the users devices. The particular embodiment of the invention described herein, provides management capabilities of a shared object space distributed among a set of potentially heterogeneous devices connected by a LAN-like network. Of course the invention is also applicable to a network of homogeneous devices. However for the purposes of explanation and to better describe the functionality of the invention, a heterogeneous network will be discussed.

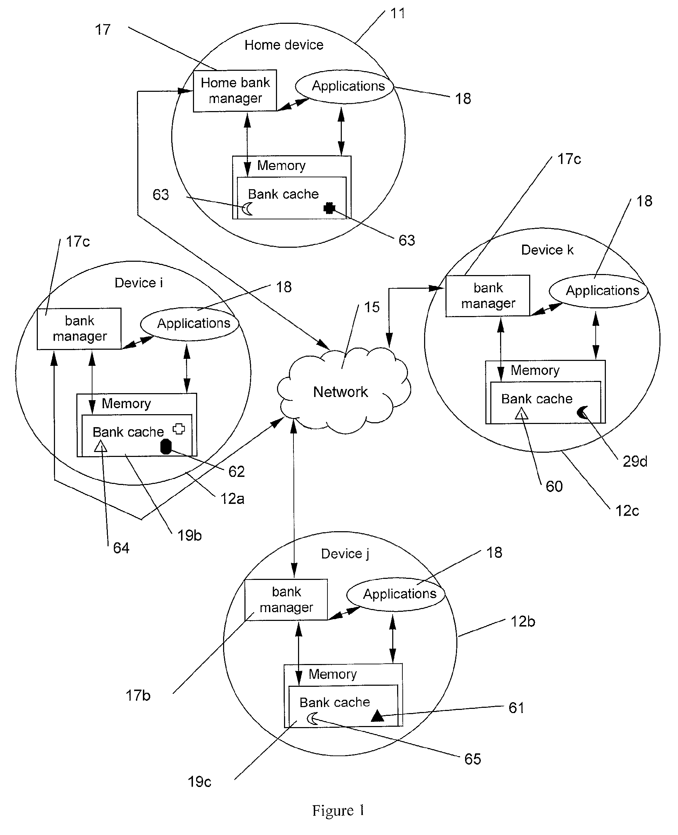

Figure 1 illustrates a profile bank distributed across four devices. These correspond to a supervisor, called home device in Figure 1, and devices 12a,b,c labelled i, j and k. The home device 11 stores management information relating to the structure of the profile bank. Each device 12, including the home device 11, incorporates a bank manager 17. Each device 12 also incorporates a portion of physical memory called a bank cache 19. The set of bank caches 19 constitutes the distributed profile node space.

A profile node, also called an object, is a profile entity that can be manipulated by the profile bank. A profile node consists of a profile item and several attributes. A profile item corresponds to a data item which can be written and read. A profile attribute corresponds to meta-data for the item, for example, a sensitivity level attached to a profile attribute.

Each devices bank manager 17 handles requests from other devices via the network, manages its local bank cache 19 and handles requests for profile information coming from local applications. As noted above, the overall array of bank caches forms the distributed profile node space. Thus, the node space corresponds physically to the distributed memory locations or bank caches present in each of the devices that constitute the network.

As discussed in the background section above, it is desirable that the user profile be under the control and ownership of the user. Hence it must give the impression of being stored, from at least the users viewpoint, locally and the required profile data be available from any location using whichever device the user has access to at the time. It is also possible that the profile data may be accessed by an agent.

This raises the issue of profile data replication. There are two different approaches to data replication. The first is simply a synchronisation approach which allows copies of given data to evolve independently from one-another and are reconciled upon a cycle of proactive synchronisation events. For example, a PDA may be synchronised with a users PC to reconcile replicated data on both devices.

The second approach is one where replicated data are kept consistent on a continuous basis.

As will be clear to one familiar with the fist (synchronisation) technique, this method can result in inconsistent behaviour in between synchronisations. Also, the synchronisation approach may not be suitable where the replicated profile information has widely varying characteristics and behaviours. That is, it may not be appropriate or possible to store all profile information on each synchronised device and it may involve too much user involvement to resolve conflicting modification.

The invention therefore includes a method of managing the coherence, location and access to profile information in a network can implement the following steps:
(a) a user profile is distributed among one or more devices in the form of two or more profile nodes; and
(b) read/write operations on the profile nodes are administered according to a coherence protocol.

The coherence protocol is adapted to dynamically allocate to the devices, administrative rights over the corresponding profile nodes. The protocol also conditionally caches the profile nodes according to dynamically determined caching rights which are described below.

Profile node characteristics, changes in the structure of the network and changes in the devices constituting the network cause the profile to be dynamically replicated and distributed across the network so that the overall profile information is coherent and accessible to the requesting devices on the network.

The read/write operations include creating, modifying, and deleting profile data and broadly speaking, the coherence protocol which is proposed, uses a write-invalidate protocol with dynamic migration of administrative rights and conditional caching rights.

A write invalidate protocol is one where copies of data are invalidated in order to write to a target copy. In effect, this corresponds to disabling reading rights to the other copies while writing or modifying that piece of data. The modified data is then replicated through the distributed profile according to the coherence protocol and the chosen communication paradigm.

Administration of a profile node is performed by what is referred to as a master device. A master device is one that has administrative rights over corresponding profile data. For example, referring to figure 1, device 12c has administration rights over profile data 60, device 12b over profile data 61, 12a over profile data 64 and the home device over profile data 63. Copies of the profile data are distributed, where appropriate, throughout the profile node space. For example profile data 63 is copied in bank cache 19a on the home device while administrative ownership of the data rests with device k 12c. As changes in the network and the devices constituting the network occur, administration rights can migrate thereby allowing dynamic data ownership and control of location. To this end, specific administrative rights for one or more specified profile nodes may be dynamically allocated to a device whereby that device then manages access rights to the one or more specified profile nodes and the data which is stored there.

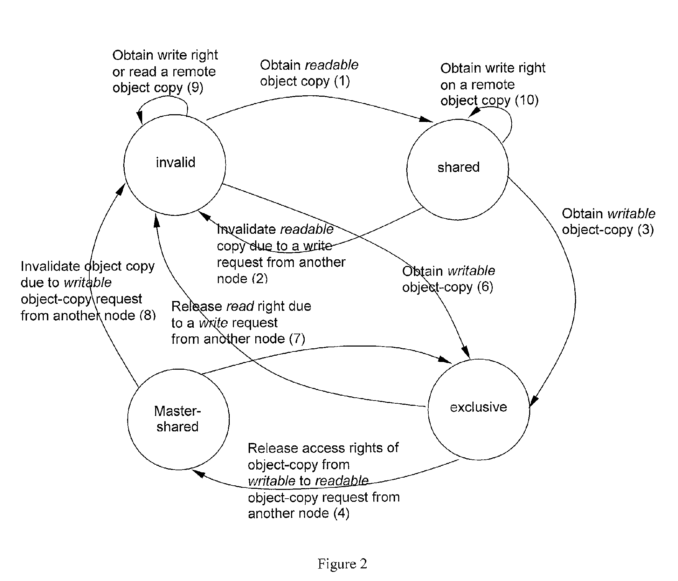

Figure 2 illustrates a state diagram illustrating the states and possible state transitions of an object-copy located in the bank cache of a host. By way of example, transition (1) corresponds to a read request on an object. A copy of an object is cached but has been invalidated as it is in the invalid state. Therefore the host manager requests a valid object copy. As the host manager obtains a valid copy, the new state associated with the copy of the object in the host bank cache becomes shared.

At a device level this can be described as an application or device sending a profile node a data request. The caching rights can be thus determined by the requesting devices characteristics, the profile node data security and policy rules. In effect, this means that authorisation to cache a copy of a readable or writeable object requires taking into account the requester host capabilities and data sensitivity.

Host access rights to certain objects are limited for a number of reasons. Firstly, hosts may be heterogeneous devices and therefore some of them may have only limited storage or power. In such situations, it may be inappropriate or simply not feasible to cache a copy of an object and thus object access is carried out remotely. Secondly, not all devices are equally trustworthy. For example, a mobile device is more prone to being stolen than a PC at a workplace. Alternatively, a PDA may not support the same security as a laptop equipped with a smart card reader. So in terms of the data confidentiality functionality, objects should not be stored on certain devices. Finally, impeding migration of an exclusive object-copy on a device which is only connected periodically may provide higher data availability. That is, when a master of an exclusive object copy is disconnected, there is no way of making available a guaranteed up-to-date object-copy available to other devices. In fact, if an exclusive object-copy exists, the coherence protocol implies that other object-copies of the same object are invalid.

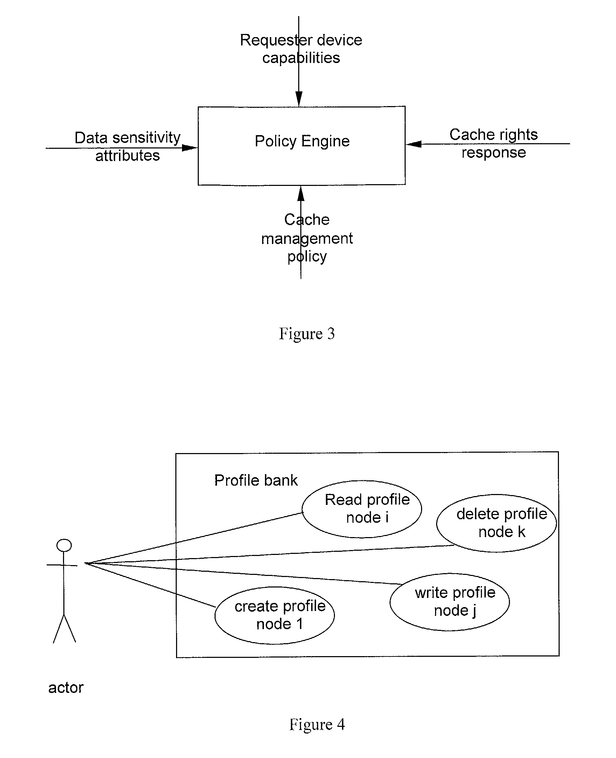

Figure 3 illustrates the general operation of the cache policy engine. The input parameters include the requester device capabilities, the data sensitivity and the cache management policy. When analysing an object in terms of its sensitivity and device capabilities, different policy decisions can be made: allowing caching of an object-copy and migration of the master authority; allowing caching and migration of the shared-master authority only, forbidding migration of exclusive master authority; allowing only caching of a shared object-copy, i.e. no migration of the master authority; and allowing no caching for the object on this device. In this last situation, access to a copy of this object will occur remotely. That it, each time the given host wishes or write the given object, it will have to do it remotely.

Referring now briefly to the physical implementation of the profile bank, it is noted that the specific details of the distributed profile space will vary significantly depending on the nature of the devices which make up the network.

Although each of the devices may vary substantially in storage and power capabilities, each device runs a program called the bank manager. This code is adapted to manage the local profile node residing in the bank cache of the device. The set of physically memory locations called the bank caches constitutes a notionally distributed profile node space. The description of a physical implementation of the invention is necessarily imprecise. The reason for this is that the invention is extremely flexible and can be adapted for use with a variety of hardware and network types. The example of a profile space being formed by a bank cache on a work PC, a bank cache on a home PC and bank cache on a PDA may be extended to include profile space on a mobile phone, mobile audio system and other application-specific appliances. It is envisaged that if a device can be configured to be network in some way and if it requires context-specific profile data in some form, the present invention can be adapted to accommodate it.

Also, it is not strictly necessary that the heterogeneous devices be physically networked. Some devices may communicate wirelessly and the coherence protocol in terms of caching operate passively using methods such as offline communication or location-specific polling techniques.

Thus the invention provides for a highly extensible method and apparatus for providing a coherent profile scheme which will, with appropriate adaptation, accommodate many devices and types of profile information.

Although the invention has been described by way of example and with reference to particular embodiments it is to be understood that modification and/or improvements may be made without departing from the scope of the appended claims.

Where in the foregoing description reference has been made to integers or elements having known equivalents, then such equivalents are herein incorporated as if individually set forth.

## Claims

1. A method of managing profile information in a heterogeneous network of devices including the steps of:
- distributing a user profile among one or more devices in the form of a plurality of profile nodes; and
- administrating read/write operations on the profile nodes according to a coherence protocol, the coherence protocol being adapted to dynamically allocate administrative rights over the profile nodes to the devices, and conditionally cache the profile nodes according to dynamically determined caching rights.

2. A method as claimed in any preceding claim wherein characteristics and/or changes in the structure of the network and/or the devices constituting the network cause the profile to be dynamically replicated and distributed across the network so that specific profile information is coherent and accessible to corresponding devices in the network.

3. A method as claimed in any preceding claim wherein the read/write operations are adapted to conform to a write-invalidate protocol.

4. A method as claimed in any preceding claim wherein the administration is performed by a master device.

5. A method as claimed in any preceding claim wherein specific administrative rights for one or more specified profile nodes are dynamically allocated to a device whereby that device then manages access rights to the one or more specified profile nodes and the data contained therein.

6. A method as claimed in claim 5 wherein the specific administrative rights dynamically migrate to other devices in response to changes in the network and the devices constituting the network.

7. A method as claimed in any preceding claim wherein for a profile node data request, the caching rights are determined according to:
(a) the requesting devices characteristics;
(b) profile node data security; and
(c) policy rules.

8. A method as claimed in any preceding claim wherein the profile nodes include one more profile item and corresponding attributes.

9. A system of networked heterogeneous devices, incorporating a profile bank, including:
(a) at least one supervisor device adapted to store management information for the devices in the system and a profile distributed across the system;
(b) one or more devices incorporating a bank cache adapted to store one or more profile nodes and interface means for handling operations on the profile nodes wherein administrative control over the profile nodes by the devices is varied dynamically in response to the characteristics of the devices and/or changes in the network and status of the devices and/or the operations carried out on the profile nodes.

10. A system as claimed in claim 9 wherein each device incorporates a bank cache adapted to store one or more profile nodes.

11. A system as claimed in claim 10 wherein each device incorporates a bank manager adapted to manage the local profile node residing in the bank cache of the device.

12. A system as claimed in either claim 10 or 11 wherein the set of bank caches constitutes a distributed profile node space.

13. A system as claimed in claim 12 wherein consistency of the object space is governed by a coherence protocol, the coherence protocol being adapted to dynamically allocate administrative rights over the profile nodes to the devices, and conditionally cache the profile nodes according to dynamically determined caching rights.

14. A system as claimed in claim 13 wherein at least one copy of the distributed profile node space resides on one device.
